# EUROPEAN PATENT SPECIFICATION

(11) **EP 0 752 787 B1**
(45) Date of publication and mention of the grant of the patent: **20.03.2002**
(21) Application number: 96850119.7
(22) Date of filing: 26.06.1996
(51) Int. Cl.: H04N 7/173

(54) **Method and device for program distribution**
Verfahren und Vorrichtung zur Verteilung von Programmen
Méthode et dispositif pour la distribution de programmes

(30) Priority: 06.07.1995 SE 9502465
(43) Date of publication of application: 08.01.1997
(73) Proprietor: TELIA AB, 123 86 Farsta (SE)
(72) Inventor: Hagström, Bengt, 125 33 Älvsjö (SE)
(74) Representative: Akerman, Marten Lennart

(56) References cited:
- EP-A- 0 431 816
- EP-A- 0 594 350
- EP-A- 0 655 865
- WO-A-95/10918
- WO-A-95/13681

## Description

### TECHNICAL FIELD

The present invention relates to distribution of programs over a network. To the network a number of program distributors are connected which provide programs to subscribers. The transmission of programs can be made individually or in broadcast function.

### PRIOR ART

Distribution of programs is known in a number of different variants. In the ether, for instance programs from different program distributors are transmitted to the receivers. In this case in advance appointed frequencies are used for the transmission. The transmission is made at fixed points of time, and the program distributor controls completely which programs that shall be transmitted and when. The receivers receive the information in question at the points of time the distributor dictates. Possibility for the subscriber to watch or listen to current programs at other points of time can be arranged by the subscriber utilizing devices which can receive and store the programs in question to be played back later. To utilize different tape recorders is for instance known for reception of radio and TV- programs.

It is further known to transmit programs over cable networks. In these cases the information is transmitted by the distributor in the cable network and received by subscribers. The program supplier also in this case directs the offer to certain times. The subscribers also in this case have to adapt themselves to the program distributor's discretion. A certain freedom to watch or listen to the program at different points of time however exists with the program distributor in this case possibly transmitting the programs repeated at different points of time. Consequently it is previously known to transmit for instance radio and TV-programs via land-based radio stations.

Further, radio and TV-programs are transmitted in the ether via different satellite stations. Further it is known to transmit programs in land-based networks which are provided by a distributor and to which a number of receivers are connected. The in the ether transmitted programs are restricted by the room for frequencies in the ether. In the wirebased networks which are utilized at present, it is mostly one distributor that provides information. The to the receivers transmitted information reaches all subscribers. To the extent that certain subscribers shall not have access to certain programs, an encoding of the programs is made. The subscribers shall at that have access to equipment which decodes the information to one in the receving device receivable information.

In patent document EP 633694 is described a system to distribute video programs. The method makes use of just any network to distribute programs in the form of packets. The channels are divided in such a way that video packets can be transmitted to the subscriber with large bandwidth and a certain bandwidth is reserved for communication of control signals from the subscriber to "video-on-demand"-systems. To the suggested system just any number of "VOD"-services can be connected.

In patent document EP 625858 a server is described, intended to be utilized in a "video-on-demand" (VOD). The program information is transmitted to the subscriber in the form of time blocks which consist of less than one second of video information.

In patent document EP 594350 an interactive telecommunication system is described. According to the document the information to different subscribers can be tailored by dividing and transmitting the information in the form of time segment. The receiver receives and decodes the packets which is intended for him/her.

In patent document US 4994909 a way to distribute programs from a central unit to a subscriber is described. The program information is multiplexed at the central unit and is transmitted in blocks of four programs to him/her.

In patent document US 4573072 is described a way to distribute the selection possibilities a telecommunication system can offer in form of "displayable choices". This is achieved by multiplexing the information in time and frequency.

The international publication WO 95/13681 discloses a digital video, audio and data distribution system which enables a set top terminal associated with e.g. a customer's television set to request interactive digital video control system messages. A Video Session Connection (VSC) is provided for setting up and maintaining interactive sessions, using a TDMA bidirectional communication path, whereas the video data is transmitted from the service provider by a uni-directional transport mechanism for packetized data, such as MPEG-2 transport packets or ATM cells.

The international publication WO 95/10918 shows a method and an apparatus for communicating data from a central station to a remote station over some form of communication path. The data, which together form at least a title, are stored on at least one storage device. The data forming that title are then retrieved as data blocks, independently of other data blocks, from storage. Preferably, the step of retrieving the data is performed in response to receiving a request for a given title, e.g. a movie.

### DESCRIPTION OF THE INVENTION

### TECHNICAL PROBLEM

Program distribution shall be possible to perform in a more flexible way than what is utilized today. Consequently, the subscriber should have possibility to chose which program he/she wants to watch or listen to. Further, there exists a need to utilize existing distribution networks in a more effective way. Programs which are not listened to/watched, should not be in the distribution channel. Moreover the subscribers should have possibility to decide themselves which programs and which distributor he/she wants to utilize.

Wishes exist to have possibility to transmit a number of programs from a number of distributors in one and the same network to a number of receivers. The in the network transmitted information shall on the one hand be identifiable with regard to program, and on the other hand be identifiable with regard to distributor. The in the network transmitted information shall be adaptable to the capacity of the network. Capacity which is not utilized by one distributor shall be possible to utilize by another distributor. The receiver further shall have possibility to select information from one or more distributors. Programs which the receiver has selected to have possibility to receive, shall be possible to receive in one or more reception devices. In the cases a number of reception devices are utilized, different programs shall be possible to receive in respective reception device. A second wish is that existing networks, such as for instance telecommunication networks in different countries, shall be possible to utilize for program distribution. The present invention has the intention to solve above related problems.

### THE SOLUTION

A method and a system according to the invention are set out in claims 1 and 7.

In a further development of the invention a distributor is allocated one or more time slots. At least one time slot is allocated each program. Control devices in the system allocate necessary time slots for the programs to the distributors.

The program offer of the distributors are presented to the subscribers who select a distributor and wanted program. The control device allocates time slot/slots for the program transmission in question. The subscriber is in this way given possibility to watch/listen to the program at a point of time which the subscriber decides. The distributors only transmit programs which the subscribers at each moment require and watch/listen to. The subscribers communicate with the distributors for identification of wanted programs. The control device allocates and identifies which time slots that shall be utilized. The channel allocation devices are informed about which time slots that are utilized in the program transmission in question.

The present invention further relates to a device at telecommunication networks for distribution of programs. To the telecommunication network, channel creating devices are connected. Connection of program distributor and receivers to the network is made via channel allocation devices. The programs are transmitted from the program distributors via the channel creating devices to the telecommunication network. Channel creating devices in connection to the receivers identify wanted channel/channels and wanted distributor/distributors. The channel creating devices transform the in time slots divided information in the network to for the receivers receivable information. The information is after that transmitted to the receivers on different radio frequencies, channels, which allow that different programs are received on one and the same occasion at different receiving devices at one and the same receiver.

The telecommunication network is at least partly ring-shaped. The programs are allocated time slots in the telecommunication network, which correspond to the program information in question. Preferably one channel/time slot is allocated for each program. The sizes of the time slots are varied depending on the channel need for the program in question. The receivers further decide which program/programs that are received, and from which program distributor/distributors the programs shall be received. Control device/devices are further arranged in the telecommunication network. The control devices receive information from the program distributors regarding the current program offer. The information is transmitted from the control device to the channel creating devices for identification of the time slots in which information shall be transmitted to the telecommunication network or be extracted from the telecommunication network. The receivers only have access to the in advance appointed programs from respective program distributor. Information regarding the selection is stored at the control devices which are arranged to inform the channel creating devices, which are arranged to select time slots in question and transform one from these received information to for the receivers receivable information. The information to the receivers are preferably transformed to frequencies/channels which can be received at for instance radio and/or TV-receivers. Transmission is in itself also possible to perform digitally to receiving equipments which are arranged to receive this type of information. In this case the channel creating devices transform the information to for the receivers receivable digital information.

### ADVANTAGES

The present invention has the advantage that the subscribers themselves can decide which distributor and which program/programs he/she wants to watch and listen to. Further, the invention has the advantage that only programs which the subscriber wants to utilize are transmitted into the network. The network can in this way be more effectively used and a number of distributors can at the same time transmit information in the network. Further, program transmission can be made individually to each subscriber.

With the present invention is allowed that a number of distributors can be connected to one and the same network. The receivers here have possibility to select programs which are distributed by one or more distributors. Only the information that shall be received by the receivers in question is extracted from the in the network transmitted information. Accordingly it is not necessary to arrange special encoding equipments or decoders. The invention further allows that transmission of information for program purposes can be made in existing telecommunication networks. Preferably should at that fibre network be utilized. Other networks can, however, be utilized as far as there is capacity.

By the indicated solution the receivers get possibility to at the same time receive a number of programs from one or more distributors on different receiving equipments which are arranged at the receiver. The reception at that can be made on established channels or frequencies which are normally used by respective receiver.

### DESCRIPTION OF FIGURES

Figure 1 shows the construction of the invention in principle.

Figure 2 shows a ring network with a number of distributors and receivers.

### DETAILED EMBODIMENT

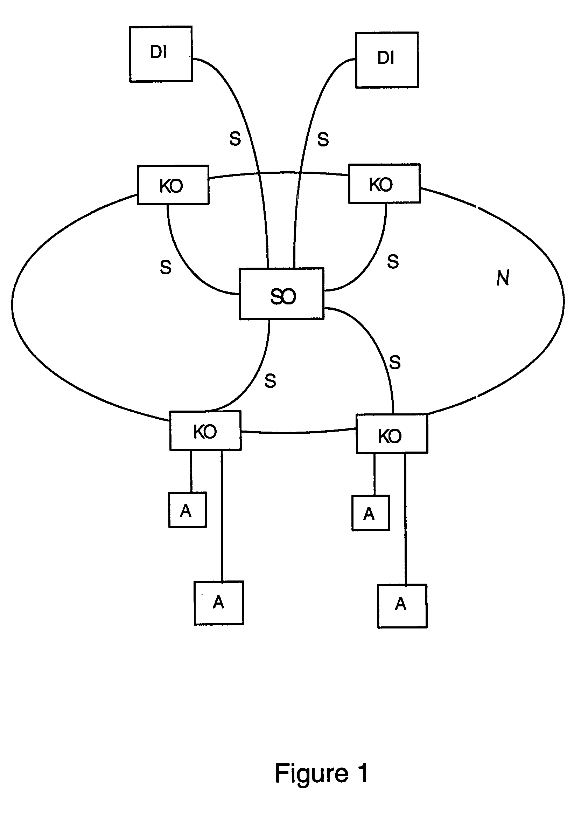

In the following the invention is described with reference to the figures and the terms therein. In Figure 1 a number of program distributors, DI, are indicated. Further, a number of subscribers, A, are indicated. The distributors and the subscribers are connected to a distribution network, N, via channel creating devices, KO. Further there is a control device, SO, indicated. The control device communicates with the channel creating devices, KO, and the distributors, DI, via signal routes, S. The distributors, DI, provide a number of programs which can be received by the subscribers, A.

In a first aspect of the invention, the distributors provide a program offer which is transmitted in the transport network. The distributors communicate before the transmission with signal creating devices and inform the signal creating device the number of programs and need of channels. The signal device analyses the need for channels from the different distributors. The signal device after that establishes which need for channels that exists, and allocates the channels between the different distributors in a suitable way. After that the channel creating devices in the system are informed about which time slots that are utilized by respective distributors and where respective programs are located. Depending on the size of the program one or more time slots can at that be utilized in ways which are known in connection with transmission of digital information in a network. The invention, however, also allows that the control device can allocate different channels different sizes of range. Also in this case the channel creating devices are informed, which after that arrange the information in the channels that are created. Possibility is at that obtained to utilize the capacity of the transport network in an effective way. The information which is transmitted from the distributor can at that be added directly into the indicated time slots, or be transformed in the channel creating devices to for the network suitable information. The information is after that transmitted in the network and is received by channel creating devices, KO, to which subscribers are connected. A subscriber, A, who wants to watch/listen to a program, at this informs his/her channel creating device about his/her wish. The channel creating device registers the wish and checks with the control device which time slot or time slots that shall be decoded. Depending on the subscriber's wish can at that all information from a distributor be decoded and transmitted towards the subscriber. The information can at that be transmitted digitally or transformed to another form, which can be received by the subscriber. The subscriber at that has possibility to receive all channels from a distributor in a usual way. The subscriber further can chose only to watch one of the programs which are transmitted, at which the channel allocation device is informed in the same way as previously. The channel creating device also in this case receives information from the control device regarding which time slot/slots that shall be extracted and decoded to make the wanted program possible to be transmitted to the subscriber. In the scenario which is now described, information is transmitted to all subscribers in the network from the distributors, but the subscribers decide themselves which distributor that shall be favoured. A number of subscribers accordingly have possibility to receive information from one and the same distributor, or from different distributors.

In a second variant of the invention the distributors continuously transmit program information over the transport network. The control device at this transmits information to the different channel creating devices about which channels that can be referred to respective distributors. When a subscriber wants to receive a program, he/she informs the channel creating device, which informs the subscriber which distributors that exist. The subscriber after that selects one of the distributors and checks in the distributor's program list which programs that exist. The subscriber can at that alternatively look at the program lists of the different distributors. If the subscriber finds a program which is of interest and he/she wants to watch/listen to, he/she informs that to the channel creating device. The channel creating device informs the control device which in its turn informs the distributor. The distributor informs the control device which channel/channels that shall be utilized with regard to the channel need the program requires. The selected channels are informed about to the distributor's channel creating device and to the subscriber's channel creating device. The program is after that transmitted from the distributor to the channel creating device. The channel creating device transforms the from the distributor received information to information which is added to the selected time slot/slots. The information is after that transmitted in the transport network and received by the current subscriber's channel creating device. The subscriber's channel creating device after that extracts the information from the slot in question, and transforms the information to for the subscriber receivable form. The channel creating device controls during the program transmission whether the subscriber is still listening to/watching the program. If the subscriber breaks the reception of the program, the checking device informs the control device, which in its turn informs the distributor, after which the connection in question is disconnected. The current slot which carries the information in the transport network is after that free to be utilized by other distributors and subscribers. The invention accordingly in this case gives a possibility to the subscribers to individually and at just any point of time watch or listen to a program that the distributor has accessible. The distributor can in this case apply different strategies for transmission of the program. Thus the program can immediately be transmitted to the subscriber in question, whereas other subscribers can, with regard to point of time, watch the same program, but displaced with regard to point of time. In other variants the distributor can decide that the programs shall be transmitted at decided points of time, for instance at every quarter of an hour. At this a number of subscribers who have chosen to watch or listen to a program are connected to the connection in question.

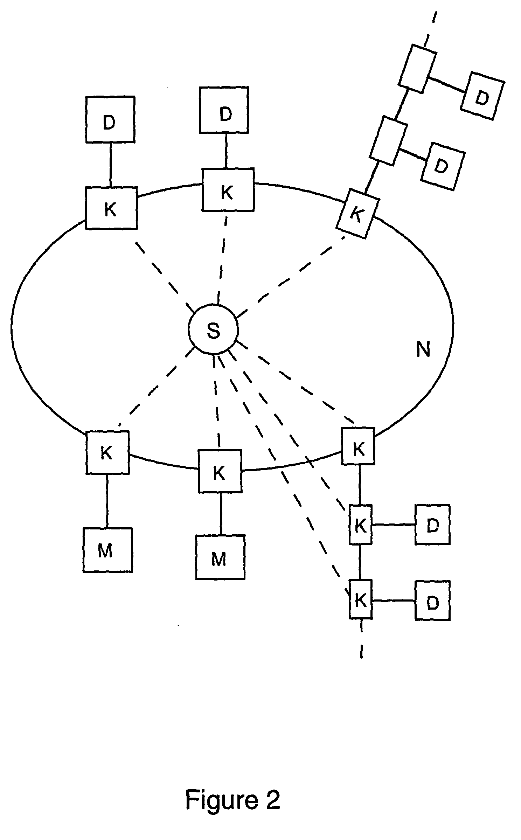

In a network, N, according to Figure 2, a number of channel creating devices, K, are arranged, and receivers, M, connected. In the figure is further indicated that the network can be divided into different parts, where the different parts can be ring-shaped, mesh-shaped etc. In the system is further included control devices, S, which have the task to distribute accessible channels in the network and to distribute said channels in best possible way with regard to the information which at each moment is transmitted in the network. The control device communicates with all channel creating devices in the system.

A program which shall be transmitted from a distributor, D, in the network is transmitted to the channel creating device to which the distributor's equipment is connected. In connection with the initiation of the program transmission, an information is transmitted to the control device, S. The control device at this receives information about the character and size of the program. The control device establishes, on the basis of the received information, which size of channel range that is required. Accordingly, different sizes of channel ranges are required, depending on whether the information that shall be transmitted relates to speech, music, video, speech and video etc. When the control device has established which size of range the program requires, the control device controls the rest of the traffic which at the moment is transmitted in the telecommunication network. The control device after that establishes whether a channel of sufficient size is accessible in the network or not. In the case a sufficiently large channel exists, this is allotted the current connection. If a channel of sufficient size is lacking, is examined whether reorganization of the channels in the network can be performed and at that create channel range of sufficient size. If the control device decides that a reorganization shall be made, the control device decides the new organisation for the channels and informs the different channel creating devices in the system how existing channels shall be redistributed and how the new channel shall be placed in the system. The channel creating devices in the system after that receive information about which time slots in the information transmission that relate to which programs and from which distributors.

The from the distributor transmitted information is after that received in the channel creating device in question. The channel creating device transforms the from the distributor received information to one for the network adapted information. The from the distributor transmitted information can be analog or digital. In the network the information is preferably transmitted digitally. The in the network transmitted information is after that transmitted in the time slot in question. The information is after that transmitted in the network and at that passes a number of channel creating devices.

When the information returns to the channel creating device from which the information was originally transmitted, new information is added to the time slot in question. If all information from the distributor has been transmitted, the time slot in question is released, and no further information is added to it. Reception of the information in question is made via channel creating devices which are connected to the respective receivers. The channel creating devices connected to the receivers identify with regard to the information from the control devices the different time slots that shall be transformed to information that can be received by the receiver. When the from the distributor transmitted information reaches the channel creating device, this identifies the time slot in question and transforms the current information to one for the receiver receivable information. Depending on which type of receiver the receiver has, the information is transformed to different frequencies/channels which can be received on for instance radio and TV-sets. The information can further be transformed to digital information which can be received by the receivers. In this case is of course assumed that the receivers are arranged for digital information. The digital information that is transmitted in the network, and that which is transmitted from the channel creating device to the receivers, is in this case not necessarily of the same format. Transformation is of course made in the channel creating device. The information which has been received by the channel creating device is forwarded to next channel creating device in the system.

## Claims

1. Method of program distribution, where subscribers (A) have been connected to a transport network (N) via subscribers' channel creating devices (KO), and distributors (DI) have been connected to the transport network via distributors' channel creating devices (KO), and the distributors transmit information to the transport network via said distributors' channel creating devices, arranged in time slots, comprising the steps of
- a subscriber communicating with different distributors for identification of selected programs;
- a control device (SO) of the network allocating and identifying time slots to be utilized for the transmission of selected programs, wherein different distributors and different programs are allocated to different time slots;
- the control device informing the subscribers' channel creating device of the time slots to be utilized for the transmission of selected programs;
- the subscribers' channel creating device selecting the time slots in question, for transforming the information in the time slots to information interpretable by the subscriber.

2. Method according to claim 1, **characterized in that** one or more time slots are allocated to a distributor.

3. Method according to any of the previous claims, **characterized in that** at least one time slot is allocated each program.

4. Method according to any of the previous claims, **characterized in that** a program offer from the distributors is presented to the subscribers, that the subscribers select a distributor and a wanted program, and that the control devices allocate time slot/slots at which the subscriber is given possibility to watch/listen to the program at a point of time which the subscriber decides.

5. Method according to any of the previous claims,
**characterized in that** the distributors only transmit programs which the subscribers at each moment demand and watch/listen to.

6. Method according to any of the previous claims, **characterized in that** the channels are flexibly allocated different sizes of ranges depending on the current need with regard to the program structure.

7. System for program distribution in a telecommunication network (N), the system comprising said telecommunication network (N), a plurality of subscribers (A) and distributors (DI) connected to said network, and a control device (SO) connected to the network (N), which control device is devised to allocate and identify time slots to be utilized for said distributors to transmit information to said subscribers through said network (N), with the transmission arranged in time slots, wherein said control device (SO) being devised to allocate time slots for the transmission of programs to a subscriber, which programs are selected by said subscriber, the system further comprising subscribers' channel creating devices (KO) connecting each subscriber to the network (N), and distributors' channel creating devices (KO) connecting each distributor to the netwcrk (N), the control device (SO) being devised to allocate different distributors and different programs to different time slots, and to inform the subscribers' channel creating devices of the concerned subscriber, and the distributors' channel creating devices of the concerned distributors, of the allocated time slots, the subscribers' channel creating device being devised to transform the information in the time slots to information interpretable by the subscriber.

8. System according to claim 7, **characterized in that** at least a part of the telecommunication network is ring-shaped.

9. System according to claim 7 or 8, **characterized in that** said control device is devised to allocate a channel/ time slot to each program.

10. System according to claim 7, **characterized by** means for allowing the receiving subscribers to decide which program/programs that shall be received and which program distributor/distributors the programs are received from.

## Patentansprüche

1. Verfahren zur Programmverteilung, wobei Teilnehmer (A) über Teilnehmerkanalerzeugungsvorrichtungen (KO) an ein Transportnetzwerk (N) angeschlossen worden sind, und Verteiler (DI) über Verteilerkanalerzeugungsvorrichtungen (KO) an das Transportnetzwerk angeschlossen worden sind, und die Verteiler Information über die Verteilerkanalerzeugungsvorrichtungen, in Zeitschlitzen angeordnet, auf das Transportnetzwerk übertragen, das die Schritte aufweist
- ein Abonnent kommuniziert mit unterschiedlichen Verteilern zur Identifikation von gewählten Programmen;
- eine Steuerungsvorrichtung (SO) des Netzwerkes verteilt und identifiziert Zeitschlitze, die für das Übertragen der gewählten Programme verwendet werden, wobei unterschiedliche Verteiler und unterschiedliche Programme unterschiedlichen Zeitschlitzen zugeordnet sind;
- die Steuerungsvorrichtung informiert die Teilnehmerkanalerzeugungsvorrichtung über die Zeitschlitze, welche für das Übertragen der gewählten Programme verwendet werden;
- die Teilnehmerkanalerzeugungsvorrichtung wählt die infragestehenden Zeitschlitze zum Umformen der Information in den Zeitschlitzen in Information, die durch den Teilnehmer interpretierbar ist.

2. Verfahren nach Anspruch 1,
**dadurch gekennzeichnet, daß** ein oder mehrere Zeitschlitze einem Verteiler zugeordnet sind.

3. Verfahren nach einem der vorstehenden Ansprüche,
**dadurch gekennzeichnet, daß** wenigstens ein Zeitschlitz jedem Programm zugeordnet ist.

4. Verfahren nach einem der vorstehenden Ansprüche,
**dadurch gekennzeichnet, daß** ein Programmangebot von den Verteilern den Teilnehmern präsentiert wird, daß die Teilnehmer einen Verteiler und ein gewünschtes Programm wählen, und daß die Steuerungsvorrichtungen einen Zeitschlitz/Zeitschlitze zuweisen, welche dem Teilnehmer die Möglichkeit geben, das Programm zu einem Zeitpunkt zu sehen/zu hören, den der Abonnent bestimmt.

5. Verfahren nach einem der vorstehenden Ansprüche,
**dadurch gekennzeichnet, daß** die Verteiler nur Programme übertragen, die die Teilnehmer zu jedem Moment anfordern und sehen/hören wollen.

6. Verfahren nach einem der vorstehenden Ansprüche,
**dadurch gekennzeichnet, daß** in Abhängigkeit von der gerade vorhandenen Notwendigkeit und mit Bezug auf die Programmstruktur in den Kanälen unterschiedliche Bereichsgrößen flexibel zugewiesen sind.

7. System zur Programmverteilung in einem Telekommunikationsnetzwerk (N), wobei das System aufweist das Telekommunikationsnetzwerk (N), eine Anzahl von Teilnehmern A und Verteiler (DI), die in dem Netzwerk verbunden sind, und eine Steuerungsvorrichtung (SO), die mit dem Netzwerk (N) verbunden ist, wobei die Steuerungsvorrichtung vorgesehen ist, um Zeitschlitze zuzuweisen und zu identifizieren, die für die Verteiler dazu verwendet werden können, Information zu den Teilnehmern durch das Netzwerk (N) zu übertragen, wobei die Übertragung in Zeitschlitzen angeordnet ist, wobei die Steuerungsvorrichtung (SO) dazu dient, Zeitschlitze für die Übertragung von Programmen zum Teilnehmer zuzuweisen, wobei die Programme vom Teilnehmer gewählt worden sind, das System ferner Teilnehmerkanalerzeugungsvorrichtungen (KO) aufweist, die jeden Teilnehmer mit dem Netzwerk (N) verbinden, und Verteilerkanalerzeugungsvorrichtungen (KO) aufweist, die jeden Verteiler mit dem Netzwerk (N) verbinden, die Steuerungsvorrichtung (SO) dazu dient, unterschiedliche Verteiler und unterschiedliche Programme unterschiedlichen Zeitschlitzen zuzuweisen, und die Teilnehmerkanalerzeugungsvorrichtungen der betroffenen Teilnehmer und die Verteilerkanalerzeugungsvorrichtungen der betroffenen Verteiler bezüglich der zugewiesenen Zeitschlitze zu informieren, wobei die Teilnehmerkanalerzeugungsvorrichtung dazu dient, die Information in den Zeitschlitzen in eine Information umzuformen, die durch den Teilnehmer interpretierbar ist.

8. System nach Anspruch 7,
**dadurch gekennzeichnet, daß** wenigstens ein Teil des Telekommunikationsnetzwerkes ringförmig ist.

9. System nach Anspruch 7 oder 8,
**dadurch gekennzeichnet, daß** die Steuerungsvorrichtung dazu dient, jedem Programm einen Kanal/ Zeitschlitz zuzuweisen.

10. System nach Anspruch 7,
**gekennzeichnet durch** Mittel, die es ermöglichen, daß die empfangenden Teilnehmer entscheiden können, welches Programm/welche Programme empfangen werden sollen und von welchem Programmverteiler/verteilern empfangen werden sollen.

## Revendications

1. Procédé de distribution de programmes, dans lequel les abonnés (A) sont connectés à un réseau d'acheminement (N) via des dispositifs de création de canaux d'abonnés (KO), et dans lequel des distributeurs (DI) sont connectés au réseau d'acheminement via des dispositifs de création de canaux de distributeurs (KO), et dans lequel les distributeurs transmettent des informations au réseau d'acheminement via lesdits dispositifs de création de canaux de distributeurs, arrangés en tranches de temps, comprenant les étapes suivantes :
un abonné communique avec différents distributeurs pour l'identification des programmes sélectionnés ;
un dispositif de commande (SO) du réseau attribue et identifie les tranches de temps destinées à être utilisées pour la transmission des programmes sélectionnés, dans lequel des distributeurs différents et des programmes différents sont attribués à des tranches de temps différentes ;
le dispositif de commande informe le dispositif de création de canaux d'abonnés des tranches de temps destinées à être utilisées pour la transmission des programmes sélectionnés ;
le dispositif de création de canaux d'abonnés sélectionne les tranches de temps en question, pour transformer les informations dans les tranches de temps en informations qui sont interprétables par l'abonné.

2. Procédé selon la revendication 1, **caractérisé en ce que** une ou plusieurs tranches de temps sont attribuées à un distributeur.

3. Procédé selon l'une quelconque des revendications précédentes, **caractérisé en ce qu'**au moins une tranche de temps se voit attribuer chaque programme.

4. Procédé selon l'une quelconque des revendications précédentes, **caractérisé en ce qu'**une offre de programme de la part des distributeurs est présentée aux abonnés, **en ce que** les abonnés sélectionnent un distributeur et un programme souhaité, et **en ce que** les dispositifs de commandes attribuent une/des tranche(s) de temps pendant lesquelles l'abonné a la possibilité de regarder/écouter le programme à un moment que l'abonné choisit.

5. Procédé selon l'une quelconque des revendications précédentes, **caractérisé en ce que** les distributeurs transmettent uniquement les programmes que les abonnés exigent et regardent/écoutent à tout moment.

6. Procédé selon l'une quelconque des revendications précédentes, **caractérisé en ce que** les canaux se voient attribuer de manière adaptable différentes tailles de capacité en fonction du besoin en courant par rapport à la structure du programme.

7. Système pour la distribution de programmes dans un réseau de télécommunications (N), le système comprenant ledit réseau de télécommunicaticns (N), une pluralité d'abonnés (A) et de distributeurs (DI) connectés audit réseau et un dispositif de commande (SO) qui est connecté au réseau (N), ledit dispositif de commande étant conçu pour attribuer et identifier les tranches de temps destinées à être utilisées par lesdits distributeurs pour transmettre les informations auxdits abonnés à travers ledit réseau (N), la transmission étant disposée en tranches de temps, dans lequel ledit dispositif de commande (SO) est conçu pour attribuer des tranches de temps pour la transmission des programmes à un abonné, lesdits programmes étant sélectionnés par ledit abonné, le système comprenant en outre des dispositifs de création de canaux d'abonnés (KO) connectant chaque abonné au réseau (N), et des dispositifs de création de canaux de distributeurs (KO) connectant chaque distributeur au réseau (N), le dispositif de commande (SO) étant conçu pour attribuer des distributeurs différents et des programmes différents à des tranches de temps différentes, et pour informer les dispositifs de création de canaux d'abonnés de l'abonné en question, ainsi que les dispositifs de création de canaux de distributeurs des distributeurs en question, des tranches de temps attribuées, le dispositif de création de canaux d'abonnés étant conçu pour transformer les informations dans les tranches de temps en informations qui sont interprétables par l'abonné.

8. Système selon la revendication 7, **caractérisé en ce qu'**au moins une partie du réseau de télécommunications est un réseau en anneau.

9. Système selon la revendication 7 ou la revendication 8, **caractérisé en ce que** ledit dispositif de commande est conçu pour attribuer un canal/une tranche de temps à chaque programme.

10. Système selon la revendication 7, **caractérisé par** des moyens pour permettre aux abonnés receveurs de décider du/des programme(s) qui va/vont être reçu(s) et du/des distributeurs(s) de programmes à partir duquel/desquels les programmes vont être reçus.
